# FASCICULE DE BREVET EUROPEEN

(11) **EP 0 282 393 B1**
(45) Date de publication et mention de la délivrance du brevet: **13.01.1993**
(21) Numéro de dépôt: 88400462.3
(22) Date de dépôt: 29.02.1988
(51) Int. Cl.: H04M 9/08, H04B 3/20

(54) **Dispositif pour la réalisation de la fonction "mains-libres" dans un poste téléphonique, associant les fonctions de commutation de gain et d'annulation d'echo**
Einrichtung zur Realisierung der Freisprechfunktion in einem Fernsprechapparat mit Assoziierung der Verstärkungsschaltungs- und Echoannullierungs-Funktionen
Device for the realization of the hands free function in a telephone set associated with the functions of gain switching and echo cancelling

(30) Priorité: 03.03.1987 FR 8702850
(43) Date de publication de la demande: 14.09.1988
(73) Titulaire: FRANCE TELECOM, 75015 Paris (FR)
(72) Inventeur: Connan, Jean-Louis, F-22560 Trebeurden (FR); Huiban, Jean-Yves, F-22300 Lannion (FR); Pinaud, Serge, F-22300 Lannion (FR)
(74) Mandataire: Signore, Robert

(56) Documents cités:
- WO-A-86/03912
- GB-A- 2 125 657
- PATENT ABSTRACTS OF JAPAN, vol. 9, no. 169 (E-328)[1892], 13 juillet 1985; & JP-A-60 41 849
- PATENT ABSTRACTS OF JAPAN, vol. 7, no. 123 (E-178)[1268], 27 mai 1983; & JP-A-58 42 345

## Description

La présente invention a pour objet un dispositif permettant la réalisation de la fonction "mains-libres" dans un poste téléphonique. Un poste téléphonique est dit "à mains libres" lorsque le haut-parleur et le microphone sont disposés dans une même enceinte sans que l'utilisateur ait à se saisir du combiné. Le couplage acoustique entre haut-parleur et microphone pose des problèmes particuliers de stabilité dont la solution constitue la fonction "mains libres".

Le procédé classique utilisé jusqu'à ce jour pour réaliser cette fonction était la commutation de gain. Ce principe bien connu consiste à atténuer alternativement l'un ou l'autre des sens de transmission (émission ou réception) en fonction des niveaux des signaux émis et reçus. Les amplificateurs et atténuateurs sont conçus de telle façon que le gain de boucle soit constant et inférieur au seuil d'amorçage (effet Larsen). La mise en oeuvre de ce procédé peut se faire sous forme analogique ou comporter des sous-ensembles numériques comme décrit dans le document FR-A-2 566 980. L'obtention d'une efficacité suffisante nécessite, dans ces réalisations, une grande amplitude de commutation de gain, ce qui peut constituer une gêne pour l'utilisateur. En effet, le signal reçu par le microphone a pour effet de placer l'appareil en émission et donc d'atténuer fortement la voix du correspondant distant. A l'extrême, ce principe peut donner l'impression d'un fonctionnement en alternat, se traduisant par une inintelligibilité des débuts et fins de phrases.

Un autre procédé utilisable est l'annulation d'écho qui est jusqu'alors utilisé dans le domaine des transmissions. Ce procédé repose sur l'utilisation d'un filtre auto-adaptatif simulant la réponse impulsionnelle de l'ensemble transducteur-environnement acoustique. La réalisation de la fonction "mains-libres" par ce procédé impose l'utilisation d'un filtre numérique de longueur importante capable de synthétiser la réponse impulsionnelle de la pièce. Les performances requises ne peuvent être obtenues que dans un environnement calme après un temps de convergence relativement long et au prix de moyens de calculs très sophistiqués. Toute modification de l'environnement dégrade les performances du dispositif d'annulation et devient source d'instabilité. En pratique, il apparaît que pour qu'un tel dispositif soit exploitable, il doit se limiter à la synthèse de réponses impulsionnelles courtes (inférieures à 10 ms). Cette condition limite les performances d'annulation d'écho et nécessite une combinaison avec un autre organe tel qu'un commutateur de gain.

Le document WO-A-8 603 912 décrit déjà un dispositif pour la réalisation de la fonction "mains-libres", qui comprend des atténuateurs dans les voies d'émission et de réception et un moyen d'annulation d'écho avec un filtre et un soustracteur. Mais, dans un tel dispositif, l'atténuation totale introduite dans les voies d'émission et de réception est constante.

Or, les inventeurs ont montré que le filtre auto-adaptatif dont le rôle est de reproduire la réponse impulsionnelle de la boucle acoustique, ne peut adapter sa fonction de transfert qu'en présence de signal émis par le haut-parleur. En l'absence de ce signal, toute modification de l'environnement acoustique ne peut être prise en compte par le système, ce qui entraîne une baisse des performances du dispositif d'annulation d'écho et provoque une instabilité.

De façon précise, la présente invention a donc pour objet un dispositif réalisant la fonction "mains-libres" dans un terminal téléphonique dans lequel les atténuateurs sont commandés par un organe de calcul qui, en fonction des amplitudes relatives des signaux de parole présents sur chaque voie (émission et réception) et du gain du dispositif d'annulation d'écho qui en découle, détermine la valeur optimale d'atténuation à insérer dans chacune des voies pour assurer la stabilité et procurer l'efficacité acoustique maximale. L'atténuation globale de la boucle est rendue variable en fonction des performances de l'annuleur d'écho.

De toute façon, l'invention sera mieux comprise à la lecture de la description qui va suivre. Cette description se réfère à des dessins annexés sur lesquels :
- la figure 1 représente schématiquement un dispositif à annulation d'écho et à commutateur de gain,
- la figure 2 illustre un premier mode de réalisation du dispositif de l'invention,
- la figure 3 illustre une variante pour utilisation sur un réseau deux fils de type analogique,
- la figure 4 illustre une autre variante de réalisation,
- la figure 5 illustre encore une autre variante de réalisation,
- la figure 6 illustre encore une autre variante de réalisation,
- la figure 7 illustre encore une autre variante de réalisation,
- la figure 8 illustre encore une autre variante de réalisation.

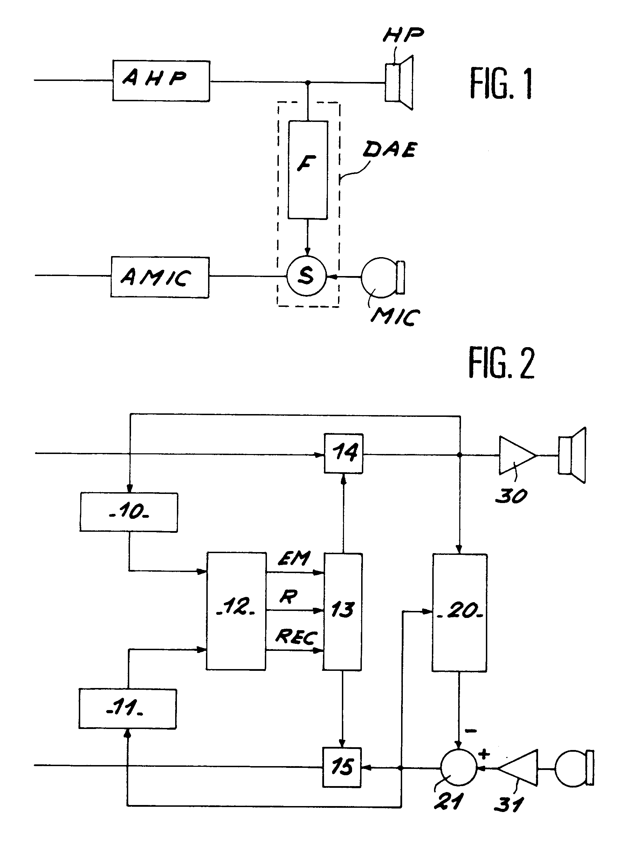

Le schéma de la figure 1 représente un système quatre fils avec un atténuateur AHP, relié à un haut-parleur HP, un atténuateur AMIC relié à un microphone MIC et un dispositif d'annulation d'écho DAE comprenant un filtre F et un soustracteur S.

Les atténuations introduites par les deux atténuateurs sont notées respectivement AHP et AMIC. Le gain du soustracteur S est noté G.

En l'absence de dispositif d'annulation d'écho on note A l'atténuation globale (AHP+AMIC) nécessaire à l'obtention d'une efficacité satisfaisante en émission et en réception.
- en émission on aura : AMIC = AHP=A
- en réception on aura : AMIC = A AHP=0

Si l'on ajoute un dispositif d'annulation d'écho, on peut abaisser l'amplitude de l'atténuation :
- en émission on aura : AMIC = AHP=A-G
- en réception on aura : AMIC=A-G AHP=0

La recherche de stabilité pour le système dans toutes les phases de fonctionnement (émission et réception) conduit à prendre en compte le gain G obtenu dans les pires conditions de fonctionnement, c'est-à-dire en l'absence de signal sur le haut-parleur. Dans ce cas, l'obtention d'une efficacité suffisante impose une commutation de gain maximale.

Or, l'analyse du fonctionnement du dispositif d'annulation révèle qu'en présence de signaux émis par le haut-parleur, le gain G augmente considérablement. Soit g cet accroîssement de gain. Les égalités précédentes deviennent :
- en émission (signal du microphone prépondérant) :
   AMIC = 0 AHP=A-G
- au repos (pas de signaux) :
   AMIC =A-G AHP = 0

   (on pourrait avoir également :
   (AMIC = (A/2)-G, AHP = A/2 par exemple) L'ensemble des atténuations de boucle est égal à A-G.
- en réception (signal sur le haut-parleur)
   AMIC = A-(G+g) AHP = 0

   L'ensemble des atténuations de boucle est égal à A-(G + g)

Ce calcul montre qu'en phase de réception, l'atténuation à introduire dans la voie émission, pour conserver la stabilité, est moindre du fait de l'augmentation g du gain du dispositif d'annulation d'écho.

L'augmentation de gain g possède une valeur fixe. On pourrait également prévoir que g ait une valeur pouvant varier, en fonction de paramètres liés au fonctionnement du dispositif.

Le but de la présente invention est d'évaluer à tout instant, et en particulier en phase de réception, le gain (G+g) du dispositif d'annulation afin de n'introduire, dans chaque voie, que l'atténuation minimale (A-G-g) nécessaire à la stabilité.

L'évaluation des performances du dispositif d'annulation est obtenue par détection de l'état du terminal (Emission, Repos, Réception). Cette information renseigne le commutateur de gain sur l'atténuation à introduire dans chaque voie.

Contrairement aux dispositifs réalisés par le passé, l'atténuation totale introduite dans la boucle est variable en fonction de l'état du terminal téléphonique.

Un premier mode de réalisation du dispositif de l'invention est illustré sur la figure 2.

Des premiers circuits 10 et 11 permettent de mesurer le niveau des signaux présents respectivement sur les voies réception et émission et commandent un circuit de contrôle 12 dont le rôle est de définir l'état du poste téléphonique (EMission, Repos, RECeption). Ces informations permettent à un circuit de calcul 13 de déterminer les atténuations à introduire dans chaque voie par des circuits d'atténuation variable 14 et 15. On a donc respectivement :
- à l'émission : AMIC = AHP=A-G S-(A) = A-G
- au repos : AMIC=A-G AHP=0 S(A)-= A-G
- en réception : AMIC=A-(G+g)-AHP = S(A)=A-(G+g)

où S(A) représente la somme des affaiblissements.

Un soustracteur 21 effectue la différence entre le signal provenant du microphone et le signal d'écho estimé par un filtre 20. Le signal résiduel issu du sous-ensemble 21 est émis vers la ligne téléphonique et sert à l'adaptation des coefficients du filtre 20 suivant un algorithme classique d'annulation d'écho. Les circuits 30 et 31 sont des amplificateurs.

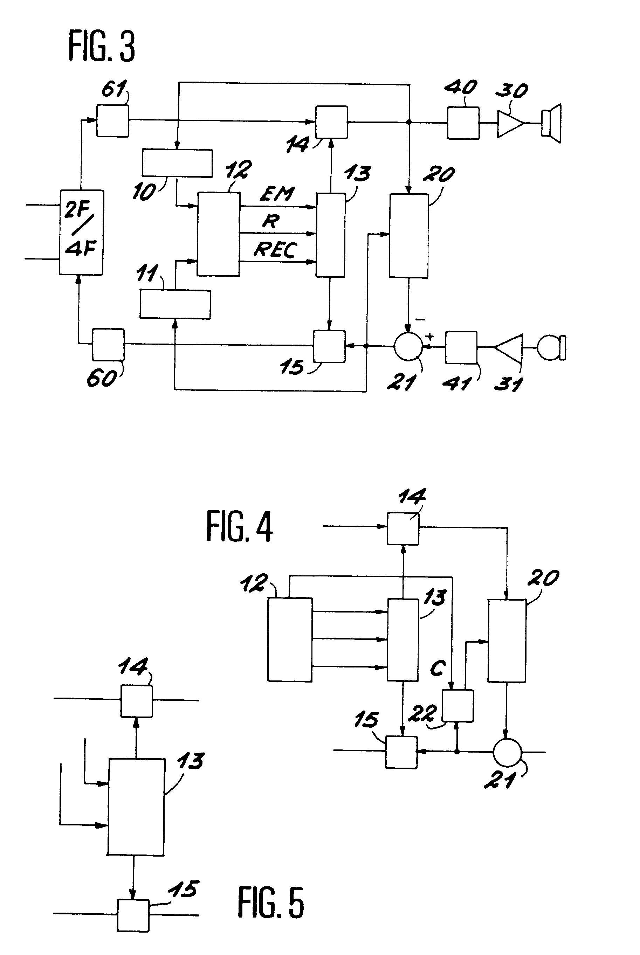

Selon une variante de l'invention représentée sur la figure 3, des circuits 40 et 41 sont des convertisseurs numérique-analogique et analogique-numérique respectivement. Ils permettent de réaliser l'ensemble des fonctions de commutation de gain et d'annulation d'écho sous forme numérique. Cette variante facilite l'intégration du dispositif dans un terminal de conception entièrement numérique. Dans le cas où le dispositif est intégré dans un poste analogique, d'autres convertisseurs numérique-analogique 60 et analogique-numérique 61 permettent de réaliser l'interface avec un circuit différentiel 2 fils/4 fils.

Selon une autre variante de l'invention représentée sur la figure 4, l'organe de contrôle 12 fournit à un sous-ensemble 22 du dispositif d'annulation une information ne l'autorisant à adapter ses coefficients qu'en présence d'un signal satisfaisant sur la voie réception. Typiquement, le sous-ensemble 22 est constitué par un interrupteur dont l'état ouvert ou fermé est commandé par un signal en provenance de l'organe de contrôle 12, ce signal prenant une valeur déclenchant la fermeture de l'interrupteur lorsque le signal prélevé sur la voie réception (entrée du circuit 10) dépasse un seuil prédéterminé.

Selon une autre variante de l'invention présentée sur la figure 5, le circuit 13 possède des entrées provenant du monde extérieur lui indiquant le niveau de réception souhaité par l'utilisateur et lui permettant d'ajuster les atténuations sur chaque voie. L'atténuation N demandée par l'utilisateur, sur la voie réception, est prise en compte par l'organe de calcul et soustraite sur la voie émission.

Les atténuations deviennent :
- en émission : AMIC = AHP=A-G S-(A) = A-G
- au repos : AMIC = A-(N + G)-AHP=N S(A) = A-G
- en réception : AMIC = A-(N+G+g)-AHP = N S(A)=A-(G+g)

où N est l'atténuation introduite par l'utilisateur.

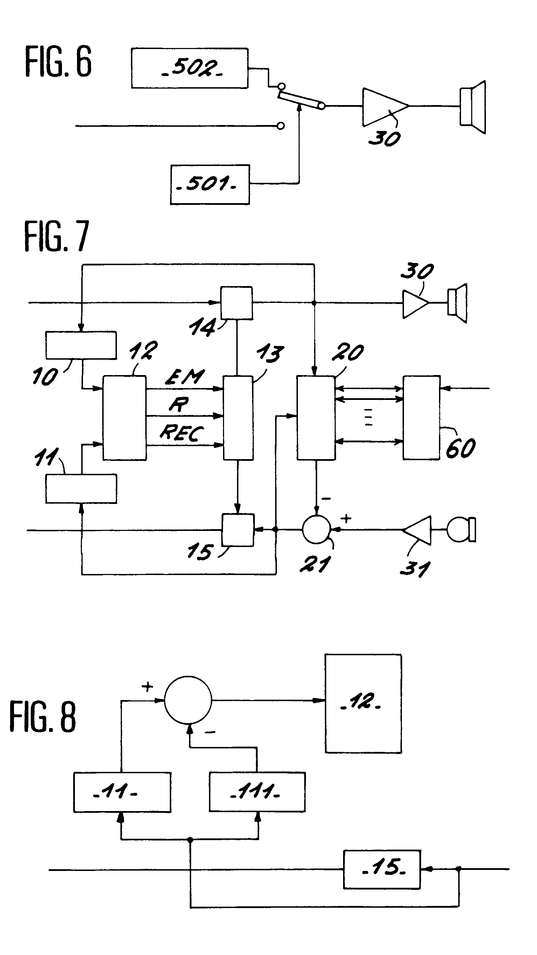

Selon une autre variante de l'invention présentée sur la figure 6, un dispositif 50 remplace, lors de la mise en service du dispositif, le signal de réception en provenance de la ligne par un bruit blanc, ceci dans le but d'améliorer la convergence du dispositif d'annulation d'écho. A cette fin, le dispositif 50 comprend un temporisateur 501 fixant la durée d'émission du signal de bruit blanc délivré par un générateur 502.

Selon une autre variante de l'invention représentée sur la figure 7, un dispositif 60 assure la mémorisation des coefficients du filtre après chaque utilisation afin de faciliter la convergence du dispositif d'annulation d'écho lors de la prochaine utilisation.

Selon une autre variante de l'invention représentée sur la figure 8, le circuit 11 possède des moyens 111 pour définir le niveau moyen du signal de bruit contenu dans le signal d'émission et pour retrancher cette valeur au signal représentatif du niveau sur cette voie avant son entrée sur le circuit 12.

## Revendications

1. Dispositif pour la réalisation de la fonction "mains-libres" dans un poste téléphonique comprenant : dans une voie de réception connectée à un haut-parleur (HP) un premier atténuateur variable (14) ayant un premier facteur d'atténuation, dans une voie d'émission connectée à un microphone (MIC) un second atténuateur variable (15) ayant un second facteur d'atténuation ; un moyen d'annulation d'écho comprenant un filtre (20) et un soustracteur (21) disposé entre le second atténuateur (15) et le microphone (31), ce soustracteur (21) effectuant la différence entre le signal provenant du microphone et un signal d'écho estimé par le filtre (20), ce dispositif étant caractérisé par le fait qu'il comprend en outre :
- des circuits (10, 11) pour mesurer le niveau des signaux présents respectivement sur les voies de réception et d'émission,
- un circuit de contrôle (12) relié aux précédents circuits (10, 11) et délivrant trois signaux (EM, R, REC) selon que le dispositif est en émission, au repos ou en réception,
- un circuit de calcul (13) recevant les signaux délivrés par le circuit de contrôle (12) et commandant les premier et second facteurs d'atténuation des premier et second atténuateurs variables (14, 15) de telle sorte que la somme de ces facteurs d'atténuation soit égale à A-G lorsque le dispositif est en émission ou au repos et soit égale à A-(G + g) lorsque le dispositif est en réception, où A est la somme des premier et second facteurs d'atténuation (14, 15) assurant la stabilité du système en l'absence de moyen d'annulation d'écho (20, 21), G est le gain dudit moyen d'annulation d'écho en émission ou au repos et G+g le gain dudit moyen en réception.

2. Dispositif selon la revendication 1, caractérisé en ce qu'il comprend des moyens (22) permettant au dispositif d'annulation d'écho de n'adapter ses coefficients que sous certaines conditions.

3. Dispositif selon la revendication 2, caractérisé en ce que le filtre (20) n'adapte ses coefficients que lorsque le signal sur la voie réception dépasse un seuil prédéterminé.

4. Dispositif selon l'une quelconque des revendications 1 à 3, caractérisé en ce qu'il comprend des moyens pour ajuster l'atténuation dans la voie réception en fonction du niveau d'écoute choisi par l'utilisateur et pour soustraire l'atténuation ainsi apportée, si elle existe, de l'atténuation insérée dans l'autre voie, en phase de réception.

5. Dispositif selon l'une quelconque des revendications 1 à 4, caractérisé en ce qu'il comprend des moyens (501, 502) pour émettre, lors de la mise en service, sur la voie de réception, un signal de bruit blanc dans le but d'améliorer la convergence du moyen d'annulation d'écho.

6. Dispositif selon l'une quelconque des revendications 1 à 5, caractérisé en ce qu'il comprend un moyen (60) assurant la mémorisation des coefficients du filtre (20) après chaque utilisation dans le but de faciliter la convergence du moyen d'annulation d'écho lors d'une utilisation ultérieure.

7. Dispositif pour la réalisation de la fonction "mains-libres" dans un poste téléphonique selon l'une quelconque des revendications 1 à 6, caractérisé en ce qu'il comprend des moyens (111) pour définir le niveau moyen de bruit contenu dans le signal en émission et pour retrancher cette valeur au signal représentatif du niveau d'émission.

## Claims

1. Device for performing the "hands-free" function in a telephone set comprising in a reception channel connected to a speaker (HP) a first variable attenuator (14) having a first attenuation factor, in a transmission channel connected to a microphone (MIC) a second variable attenuator (15) having a second attenuation factor, an echo suppression means incorporating a filter (20) and a subtractor (21) positioned between the second attenuator (15) and the microphone (31), said subtractor (21) effecting the difference between the signal from the microphone and an echo signal estimated by the filter (20), said device being characterized in that it also comprises:
circuits (10, 11) for measuring the level of the signals present respectively on the reception and transmission channels,
a control or checking circuit (12) connected to the circuits (10, 11) and supplying three signals (EM, R, REC) as a function of whether the device is transmitting, inoperative or receiving, a calculating circuit (13) receiving the signals supplied by the checking circuit (12) and controlling the first and second attenuation factors of the first and second variable attenuators (14, 15) in such a way that the sum of these attenuation factors is equal to A-G when the device is transmitting or inoperative and equal to A-(G+g) when the device is receiving, where A is the sum of the first and second attenuation factors (14, 15) ensuring the stability of the system in the absence of the echo suppression means (20, 21), G is the gain of said echo suppression means during transmission or when inoperative and G + the gain of said reception means.

2. Device according to claim 1, characterized in that it comprises means (22) enabling the echo suppression means to only adapt its coefficients under certain conditions.

3. Device according to claim 2, characterized in that the filter (20) only adapts its coefficients when the signal on the reception channel exceeds a predetermined threshold.

4. Device according to any one of the claims 1 to 3, characterized in that it comprises means for adjusting the attenuation in the reception channel as a function of the listening level chosen by the user and for subtracting the thus supplied attenuation, if it exists, from the attenuation inserted in the other channel during the reception phase.

5. Device according to any one of the claims 1 to 4, characterized in that it comprises means (501, 502) for transmitting, during the putting into operation, on the reception channel of a white noise signal with a view to improving the convergence of the echo suppression means.

6. Devie according to any one of the claims 1 to 5, characterized in that it comprises a means (60) ensuring the storage of the coefficients of the filter (20) following each use with a view to facilitating the convergence of the echo suppression means during a subsequent use.

7. Device for carrying out the "hands-free" function in a telephone set according to any one of the claims 1 to 6, characterized in that it comprises means (111) for defining the mean noise level contained in the signal in transmission and for subtracting this value from the signal representing the transmission level.

## Patentansprüche

1. Freisprecheinrichtung für einen Fernsprechapparat, umfassend: ein erstes Regelglied (14) mit einem ersten Dämpfungsfaktor in einer mit einem Lautsprecher (HP) verbundenen Empfangsleitung, ein zweites Regelglied (15) mit einem zweiten Dämpfungsfaktor in einer mit einem Mikrophon (MIC) verbundenen Sendeleitung; ein Mittel zur Echounterdrückung, einen Filter (20) und ein Subtrahierglied (21) enthaltend, angeordnet zwischen dem zweiten Regelglied (15) und dem Mikrophon (31), wobei dieses Subtrahierglied (21) die Differenz aus dem vom Mikrophon stammenden Signal und einem vom Filter (20) abgeschätzten Echo bildet, Einrichtung, dadurch gekennzeichnet, daß sie darüber hinaus enthält:
- Schaltungen (10, 11) zur Messung des Pegels der auf der Empfangs- bzw. Sendeleitung anliegenden Signale,
- eine mit den vorhergehenden Schaltungen (10, 11) verbundene Kontrollschaltung (12), die drei Signale (EM, R, REC) abgibt, je nachdem, ob die Einrichtung im Sendebetrieb, in Ruhestellung oder im Empfangsbetrieb ist,
- eine Rechenschaltung (13), die die von der Kontrollschaltung (12) abgegebenen Signale empfängt und den ersten und zweiten Dämpfungsfaktor des ersten und zweiten Regelgliedes (14, 15) derart regelt, daß die Summe dieser Dämpfungsfaktoren gleich A-G ist, wenn die Einrichtung im Sendebetrieb arbeitet oder in Ruhestellung ist, und gleich A-(G+g) ist, wenn die Einrichtung im Empfangsbetrieb arbeitet, wobei A die Summe des ersten und zweiten Dämpfungsfaktors (14, 15) ist, die die Stabilität des Systems bei Abwesenheit des Mittels zur Echounterdrückung (20, 21) sichert, G der Verstärkungsfaktor des genannten Mittels zur Echounterdrückung im Sendebetrieb und in Ruhestellung und G + g der Verstärkungsfaktor des genannten Mittels im Empfangsbetrieb.

2. Einrichtung gemäß Patentanspruch 1, dadurch gekennzeichnet, daß sie Mittel (22) enthält, die dem Mittel zur Echounterdrückung erlauben, seine Koeffizienten nur unter gewissen Bedingungen anzupassen.

3. Einrichtung gemäß Patentanspruch 2, dadurch gekennzeichnet, daß der Filter (20) seine Koeffizienten nur anpaßt, wenn das Signal auf der Empfangsleitung einen gewissen Schwellenwert überschreitet.

4. Einrichtung gemäß irgendeinem der Patentansprüche 1 bis 3, dadurch gekennzeichnet, daß sie Mittel enthält, um die Dämpfung in der Empfangsleitung in Abhängigkeit vom durch den Benutzer gewählten Abhörpegel zu regeln und um die so erzeugte Dämpfung, wenn sie existiert, von der in die andere Leitung im Empfangsbetrieb eingebrachten Dämpfung zu subtrahieren.

5. Einrichtung gemäß irgendeinem der Patentansprüche 1 bis 4, dadurch gekennzeichnet, daß sie Mittel (501, 502) enthält, um bei Inbetriebnahme auf die Empfangsleitung ein Signal in Form weißen Rauschens zu legen, um die Konvergenz des Mittels zur Echounterdrükkung zu verbessern.

6. Einrichtung gemäß irgendeinem der Patentansprüche 1 bis 5, dadurch gekennzeichnet, daß sie ein Mittel (60) enthält, das die Speicherung der Koeffizienten des Filters (20) nach jeder Benutzung sicherstellt, um die Konvergenz des Mittels zur Echounterdrückung bei einer späteren Benutzung zu erleichtern.

7. Freisprecheinrichtung für einen Fernsprechapparat gemäß irgendeinem der Patentansprüche 1 bis 6, dadurch gekennzeichnet, daß sie Mittel (111) enthält, um den mittleren Rauschpegel im Sendesignal zu bestimmen und um diesen Wert vom den Sendepegel darstellenden Signal abzuziehen.
